Europäisches Patentamt

European Patent Office

Office européen des brevets

(11) Publication number: **0 498 970 A1**

# EUROPEAN PATENT APPLICATION

(21) Application number: **91202019.5**

(22) Date of filing: **06.08.91**

(51) Int. Cl.5: **B62D 27/06**

(30) Priority: **14.02.91 BE 9100134**

(43) Date of publication of application:
**19.08.92 Bulletin 92/34**

(84) Designated Contracting States:
**DE FR GB LU NL**

(71) Applicant: **Van Hool, naamloze vennootschap**
**Bernard Van Hoolstraat 58**
**B-2578 Lier(BE)**

(72) Inventor: **van Hool, Jozef Karel**
**Liersebaan 235**
**B-2500 Koningshooikt(BE)**

(74) Representative: **Donné, Eddy**
**Bureau M.F.J. Bockstael nv Arenbergstraat**
**13**
**B-2000 Antwerpen(BE)**

(54) Telescopically extendable stanchions for the tarpaulin of a lorry.

(57) Cover for lorries, made up of a frame (3) and a coating (4), characterized in that the frame (3) has a number of telescopic posts (5A,5B) which allow for the roof (12) of the cover (2) to be lifted, whereby several of these posts (5A) have means which allow for a positive manipulation, such that the posts (5A) can be directed by means of a controlled movement when they are slid either in or out.

Fig. 4

The present invention concerns a cover for lorries, as well as a post used with such a cover.

It is known that the cover of a lorry, be it a freight car, a semi-trailer or trailer, usually consists of a frame and a coating carried by this frame.

A fixed cover is disadvantageous in that when loading a fork-lift truck the loading space cannot be filled over its entire height, because the profiles at the top edge of the frame partially obstruct the free entrance to the loading space on the one hand, and because the load is moved at a certain height over the loading floor before being put down on the other hand.

The present invention concerns a cover which excludes the above-mentioned disadvantage.

To this aim, the present invention concerns a cover for lorries, made up of a frame and a coating, characterized in that the frame has a number of telescopic posts which allow for at least part of the roof of the cover to be lifted, whereby several of these posts have means which allow for a positive manipulation, such that the posts can be directed by means of a controlled movement when they are slid either in or out.

According to a special characteristic of the invention, the posts are made up of individual elements which each have their own means of manipulation. This is advantageous in that a possible dismounting of the cover from the frame is not any more difficult than with a conventional frame whose roof cannot be lifted. This also offers the advantage that when such a post is damaged, it can be easily replaced.

The invention also concerns a post for the cover of lorries, characterized in that this post has means with which it can be slid in or out, in preference individually, in a controlled manner.

In order to better explain the characteristics of the invention, by way of example only and without being limitative in any way, the following preferred embodiment is described with reference to the accompanying drawings, where:

figure 1 schematically represents the disadvantage mentioned in the introduction when loading a lorry with a conventional cover;

figure 2 is a schematic representation of a lorry equipped with a cover according to the invention;

figure 3 represents a telescopic post from the cover of figure 2;

figure 4 shows a view according to arrow F4 in figure 2 as the post is being slid out;

figure 5 shows the post of figure 3 in its extended position;

figures 6, 7, 8, 9, 10 and 11 are sections according to lines VI-VI, VII-VII, VIII-VIII, IX-IX, X-X and XI-XI in figure 3;

figure 12 shows a similar view as in figure 11, but for a different position;

figure 13 shows a section according to line XIII-XIII in figure 5;

figure 14 shows a section to a larger scale of the part indicated in figure 2 with F14;

figure 15 shows a section according to line XV-XV in figure 2;

figures 16 to 20 schematically illustrate the use of the cover.

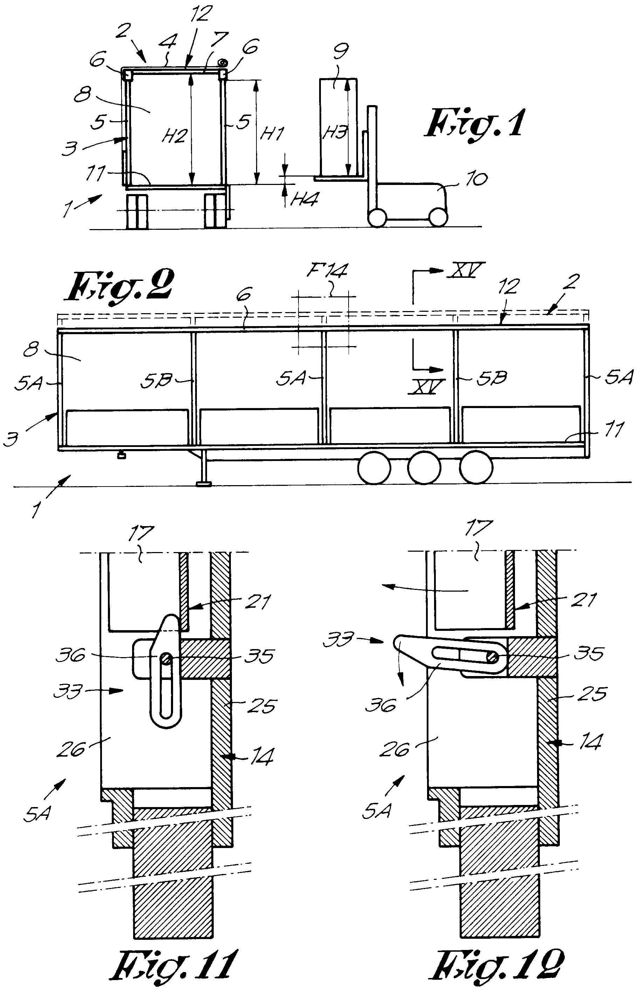

Figure 1 shows a schematic representation of a lorry 1 with a cover 2. As is known, such a cover 2 mainly consists of a frame 3 and a coating 4 working in conjunction with it. The frame 3 mainly consists of vertical posts 5 which support the roof edge, formed by horizontal profiles 6, whereby a number of cross profiles 7 have been applied in between said profiles 6.

As the profiles 6 have a larger diameter than the cross profiles 7 the loading space 8 is only accessible from the sides over a height H1 which is smaller than the height H2 of the loading space. Moreover, when a load 9 is loaded with a fork-lift truck 10, said load 9 can only have a height H3 which is smaller still than the above-mentioned height H1 since this load 9 must be moved at a reduced height H4 over the loading floor 11 before being put down. Also, this implies that part of the loading space 8 remains unused.

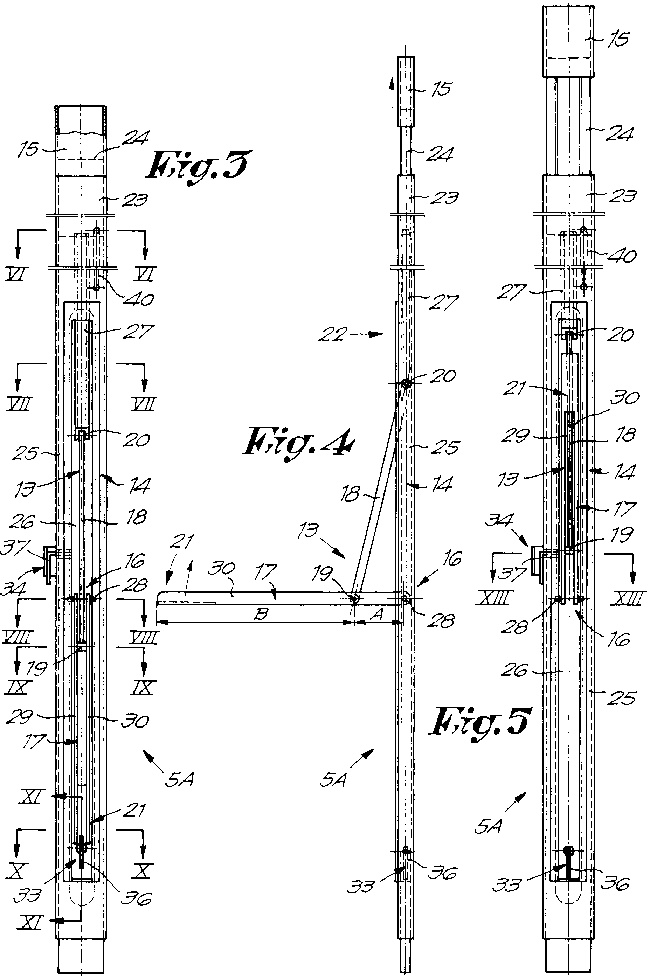

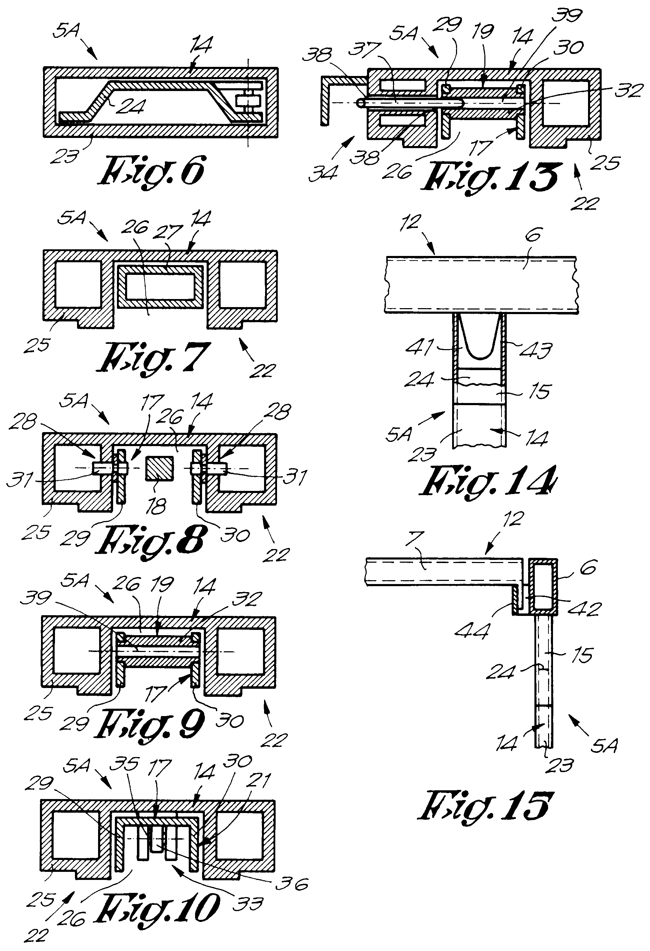

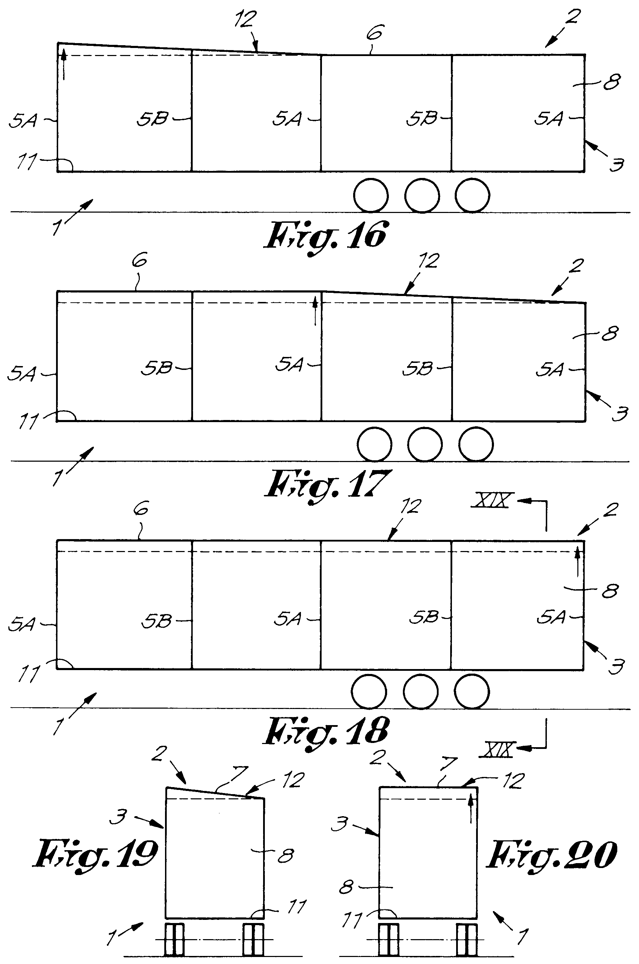

According to the present invention, the above-mentioned problem is solved by making use of a cover 2 which is characterized in that the frame 3 has a number of telescopic posts 5A-5B, which make it possible for the roof 12 of the cover 2, or at least part of the roof 12, to be lifted as shown in figure 2. Also according to the invention, at least a number of these posts, in this case the posts 5A, have means which allow for a positive manipulation, in other words means which provide a controllable movement as the posts 5A are either slid in or out. As shown in figures 3 to 5 these means in preference consist of a lever mechanism 13.

As shown in figures 3 to 5, the posts 5A mainly consist of two parts, namely a first fixed part 14 and second telescopic part 15.

As shown in figure 4 the lever mechanism 13 mainly consists of a lever 17 attached in a hingeable manner to the first part 14 near one end 16 and an element 18 which forms a connection between the lever 17 and the above-mentioned second part 15. Said element 18 is hereby attached at one end to the lever 17 by means of a hinge point 19 and at the other end to the second part 15 by means of a hinge point 20.

The hinge point 19 is in preference situated at a distance A from the end 16 which is considerably smaller than the distance B between said hinge point 19 and the free end 21 of the lever 17. The hinge point 20 is situated in preference at the bottommost end of the above-mentioned second part 15.

According to yet another major characteristic of the invention, the above-mentioned means to operate the telescopic posts 5A have been built in in these posts. In the example shown, this implies that the lever mechanism 13 is countersunk in the profile of the first part 14, at least when the post 5A in question is withdrawn.

As shown in figures 3 to 5, the lever mechanism 13 is situated in preference at the front side 22 of the post 5A in question, in other words on the outside of the frame 3, such that said lever mechanism 13, after the removal of the coating 4, can be easily accessed.

It is clear that the posts 5A and the lever mechanisms 13 applied in them can be made in various manners and with different forms of profiles. Also, the sections of figures 6 to 10 only represent one of several possible embodiments.

As shown in figure 6, the topmost part of the first part 14 may consist for example of a rectangular profile 23, whereas the topmost part of the second part 15 which slides in it consists of what is called an omega profile 24.

According to figure 7 the bottommost part of the first part 14 has a profile 25 which is made up of two square parts in between which a recess 26 has been provided which forms a seating for the lever mechanism 13. The connection between the omega profile 24 and the hinge point 20 is formed by a profile 27 with a rectangular section.

Figure 8 illustrates the construction of the hinge point 28 which is situated at the end 16 of the lever 17. In the example shown the lever 17 consists of two parallel slats 29 and 30, whereas the hinge point 28 consists of small shafts 31.

As shown in figure 9, the hinge point 19 consists of a bush 32 fixed to the element 18 and mounted in a rotatable manner between the slats 29 and 30.

The posts 5A are provided with lockings 33 and 34 to lock the whole in the withdrawn and extended position respectively.

As shown in figures 10 to 12, the locking 33 consists of a locking element 36 which can rotate around a spindle 35 and whose free end 21 can work in conjunction with the lever 17. The spindle 35 is hereby fixed to the first part 14. The locking element 36 has such a shape that in one position, which is shown in figure 11, it forms an obstacle for the lever 21 to be taken out of the recess 26, whereas after this element 36 has been lifted and rotated the obstacle is removed.

The locking 34 consists, as is shown in figures 3, 5 and 13, of a pin 37 which can be slid through openings 38 in the first part 14 and which can act onto one of the mobile parts of the post 5A when the latter is in its extended position. In the example shown, the pin 37 acts onto the bore 39 of the above-mentioned bush 32.

As shown in figures 3, 5 and 6, the posts 5A may be provided with auxiliary elements 40 which facilitate the sliding out of these posts, such as for example an air spring or compression spring or such like.

The posts 5A are in preference made such that, as shown in figures 3 to 5, they can be freely removed from the frame 3 at any time.

Not all posts have to be equipped with operating means according to the invention. As shown in figure 2, it is possible to provide only a limited number of posts 5A with operating means, whereas the other posts 5B can be slid out freely. To this end, the posts 5B may have a telescopic part which is connected to the profiles 6, such that they slid out automatically when the roof 12 is lifted.

As shown in figures 14 and 15, the profiles 6 and the cross profiles 7 fit with a fair clearance, 41 and 42 respectively, in the specially provided seatings, 43 and 44 respectively, one and other such that the roof can be easily transformed such that the posts 5A can be slid out, respectively slid in, one after the other.

The working of the device can be easily derived from the figures. After the locking element 36 has been put from the position in figure 11 into that in figure 12, the posts 5A can be slid out by rotating upward the lever 17 at each post 5A around the hinge point 28.

As shown in figures 16 to 18 this can be done by first sliding out the posts 5A one after the other at one side of the lorry 1, which results in a form shown as a section in figure 19, after which, as shown in figure 20, also the other side of the roof 12 can be lifted.

Although the drawings represent a lorry with a cover 2 whose roof 12 can be entirely lifted, it is clear that the invention can also be applied for covers whose roof 12 can only be partly moved. This part may consist of a certain surface of the roof 12, but it may also consist of just one of the topmost mobile profiles 6 or 7.

This implies that such a cover 2 which can be lifted can also be used for vehicles with entirely or partly closed sides, whereby the construction that can be lifted makes it possible to load more via the front or back side of the vehicle. In this case, the posts 5A are for example integrated in the corners and/or sides of the coachwork.

Naturally, the coating 4 can be of any type whatsoever. It may consist of tarpaulin as well as of plates.

It is clear that the invention also relates to the posts 5A described above, in other words, posts which are characterized in that they consist of a first part 14, a second telescopic part 15 and means, such as the lever mechanism 13, which allow for a positive manipulation to slide the posts 5A in and out.

Naturally, the above-mentioned means to control the posts 5A may also be of a different nature than a lever mechanism. According to a variant the telescopic part 15 may be provided with a toothed slat which can be moved in the first part 14, and which works in conjunction with a pinion which can be turned by means of a cranked handle or such.

The present invention is in no way limited to the embodiment described by of example and shown in the accompanying drawings; on the contrary, such a cover for lorries as well as the posts used with it can be made in various forms and dimensions while still remaining within the scope of the invention.

## Claims

1. Cover for lorries, made up of a frame (3) and a coating (4), characterized in that the frame (3) has a number of telescopic posts (5A,5B) which allow for at least part of the roof (12) of the cover (2) to be lifted, whereby several of these posts (5A) have means which allow for a positive manipulation, such that the posts (5A) can be directed by means of a controlled movement when they are slid either in or out.

2. Cover according to claim 1, characterized in that it also has a number of free telescopic posts (5B).

3. Cover according to claim 1 or 2, characterized in that at least a number of the telescopic posts (5A,5B) can be freely removed.

4. Post to realize a cover according to any of claims 1 to 3, characterized in that it mainly consists of a first part (14), a second telescopic part (15) and means which allow for the positive manipulation of the telescopic post (5A), such that both the sliding in and the sliding out can be done by means of a controlled movement.

5. Post according to claim 4, characterized in that the means to operate the post (5A) consist of a lever mechanism (13).

6. Post according to claim 5, characterized in that the lever mechanism (13) mainly consists of a lever (17) attached in a hingeable manner to the first part (14) at one end (16) and an element (18) which, on the one hand, is connected to the lever (17) in a hingeable manner and which, on the other hand, is connected to the telescopic second part (15).

7. Post according to claim 6, characterized in that the distance (A) between the hinge point (19) with which said element (18) is connected to the lever (17) and the end (16) with which the lever (17) is connected to the first part (14) of the post (5A) is smaller than the distance (B) between said hinge point (19) and the free end (21) of the lever (17).

8. Post according to claim 6 or 7, characterized in that the above-mentioned element (18) is connected to the bottommost end of the telescopic second part (15) in a hingeable manner.

9. Post according to any of claims 4 to 8, characterized in that the means to operate the post (5A), to slide it in and out respectively, are countersunk in this post (5A) at least in the withdrawn position of the post (5A).

10. Post according to any of claims 4 to 9, characterized in that the means to operate the post (5A), to slide it in and out respectively, are situated at the front side (22) of the post (5A), in other words at the side which is on the outside of the cover (2).

11. Post according to any of claims 4 to 10, characterized in that it has a locking (33) with which it can be locked in its withdrawn position.

12. Post according to any of claims 5 to 8, characterized in that it has a locking with which it can be locked in its withdrawn position, and in that this locking consists of a rotatable locking element (36) which can work in conjunction with the free end (21) of the lever (17).

13. Post according to any of claims 4 to 11, characterized in that it has a locking (34) with which it can be locked in its extended position.

14. Post according to any of claims 5 to 8, characterized in that it has a locking (34) with which it can be locked in its extended position, and in that this locking (34) consists of a pin (37) which in the extended position of the post (5A) fits in openings (38) in the first part (14) and a bore (39) in the lever (17).

15. Post according to any of claims 4 to 14, characterized in that it is equipped with an auxiliary element (40) which facilitates the telescopic movement.

16. Post according to claim 15, characterized in that the auxiliary element (40) consists of an air spring which has been applied between the first part (14) and the second part (15).

17. Post according to claim 15, characterized in that the auxiliary element (40) consists of a spring which pulls apart the first part (14) and the second part (15).

*Fig.1*

*Fig.2*

*Fig.11*

*Fig.12*

Fig.3

Fig.4

Fig.5

Fig.6

Fig.7

Fig.8

Fig.9

Fig.10

Fig.13

Fig.14

Fig.15

**Fig. 16**

**Fig. 17**

**Fig. 18**

**Fig. 19**

**Fig. 20**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2 393 692 (COMPAGNIE FRANCAISE DES TRANSPORTS DROUIN) <br> * page 4, line 38 - page 5, line 14; figures 1-3 * <br> --- | 1,4-8,10 | B62D 27/06 |
| X | DE-A-3 138 338 (MÜLLER) <br> * claims 1,2,4,5; figures 1,3,4 * <br> --- | 1,4 | |
| A | FR-A-2 477 493 (HUGUET) <br> ----- | | |
| | | | **TECHNICAL FIELDS SEARCHED (Int. Cl.5 )** <br><br> B62D |

The present search report has been drawn up for all claims

| Place of search | Date of completion of the search | Examiner |
|---|---|---|
| BERLIN | 14 APRIL 1992 | LUDWIG H.J. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................

& : member of the same patent family, corresponding
document

EPO FORM 1503 03.82 (P0401)